# EUROPEAN PATENT SPECIFICATION

(11) **EP 4 066 016 B1**
(45) Date of publication and mention of the grant of the patent: **01.04.2026**
(21) Application number: 20812008.9
(22) Date of filing: 23.11.2020
(51) Int. Cl.: G01S 17/931, G01S 7/481

(54) **FOG DETECTOR FOR A VEHICLE WITH A SPECIALLY SHAPED LENS**
NEBELDETEKTOR FÜR EIN FAHRZEUG MIT EINER SPEZIELL GEFORMETEN LINSE
DETECTEUR DE BROUILLARD POUR UN VÉHICULE AVEC UNE LENTILLE DE FORME SPECIALE

(30) Priority: 28.11.2019 DE 102019132239
(43) Date of publication of application: 05.10.2022
(73) Proprietor: Valeo Schalter und Sensoren GmbH, 74321 Bietigheim-Bissingen (DE)
(72) Inventor: PEYROT, Donald, 10800 Prague (CZ); HOVORKA, Petr, 10800 Prague (CZ); HRDLICKA, Jakub, 10800 Prague (CZ)
(74) Representative: Pothmann, Karsten
(86) International application number: PCT/EP2020/083024
(87) International publication number: WO 2021/105046

(56) References cited:
- WO-A1-2020/049055
- US-A1- 2015 142 263
- US-A1- 2017 350 983
- US-A1- 2019 101 645

## Description

The present invention refers to a fog detector with a specially shaped lens.

The present invention also refers to a driving support system comprising the fog detector.

Furthermore, the present invention refers to a vehicle comprising the driving support system or the fog detector.

According to prior art methods, fog detection is performed through dedicated software to identify the presence of fog by a camera by detecting the fog induced optical blur. Some vision systems are also equipped with an illumination source. In this regard, it is referred to US 6 946 639 B2. The illumination source is used for detecting back scattering of this specific light source. Inter alia, one disadvantage is that image processing requires high computing power.

It is possible also to use a LIDAR. "LIDAR" is the abbreviation of "light detection and ranging". It is a radar-related method for optical distance and speed measurement as well as for remote measurement of atmospheric parameters. LIDAR systems for atmosphere measurement emit laser pulses and detect the backscattered light from the atmosphere. The distance to the point of scattering is calculated from the light propagation time of the signals. Cloud and dust particles in the air, that means aerosols, scatter the laser light and enable high-resolution detection and distance measurement of clouds and aerosol layers. With more complex systems, atmospheric state parameters and the concentration of atmospheric trace gases can be determined. LiDAR instruments, for example, can also be used to monitor emissions from factory chimneys for compliance with specified limit values.

Depending on the wavelength of the laser light used, LIDAR systems sensitive to molecular or particle backscattering. Also, the strength of backscattering at one wavelength depends on particle size and concentration. With LIDAR systems that use several wavelengths, the exact size distribution of the atmospheric particles can therefore be determined.

Inter alia, a disadvantage of using LIDAR is the need of high computing power to distinguish between the fog and object.

Also, some systems, such as the system described in US 2009/0138210 A1, send a collimated light beam and a receiving part collects the back-scattered light. This method is less expensive. However, misalignment between emitter and receiver makes it complicated to be implemented in some weather situations when the light is back scattered from certain distances, such as scattering from a distance which is too far away or a distance which is too close to the vehicle. In such case, back scattered light cannot be imaged by the receiver. A further disadvantage is that detection of optical phase shifts requires complex electronic systems.

US 6 495 815 B1 refers to a system for automatically detecting moisture on the windshield of a vehicle, including an optical system for imaging a portion of the windshield on to an image array sensor, such as a CMOS active pixel sensor. The voltage of each of the pixels which represents the illumination level is converted to a corresponding gray scale value by an analog digital converter. The gray scale values corresponding to the image are stored in memory. The spatial frequency composition of the gray scale values is analyzed to determine the amount of rain present in order to provide a control signal to control the operation of the windshield wipers of the vehicle as a function of the amount of moisture present. The system is also adapted to detect the level of fog both on the interior of the windshield as well as the exterior of the windshield. By providing a system for automatically detecting the presence of fog on the interior and exterior of the windshield, serious performance limitations of known automatic rain sensors are eliminated.

US 2005/253070 A1 relates to a sensor for detecting fog-like media, comprising at least two emitters and at least one receiver, whereby the emission axes intersect with the receiver axis at two different positions. The inventive sensor also comprises an evaluation unit that detects the medium when the receiver receives signals emitted by both emitters.

US 2019/101645 A1 describes a LIDAR system for a vehicle.

It is an object of the present invention to provide an improved, in particular a more reliable, driving support system, a fog detector and a vehicle.

This object is achieved by the independent claim. Advantageous embodiments are given in the dependent claims.

In particular, the present invention provides a fog detector for a vehicle, as defined in claim 1.

The driving support system can comprise a driving support system for supporting autonomous or semi-autonomous driving of respective autonomous or semiautonomous vehicles, or a driver assistance system for supporting a driver of the vehicle in different driving situations.

The fog detector may be integrated in other sensing systems of the vehicles. For example, it could be a complement of already existing product like a rain sensor.

Preferably, the fog detector is designed as an infrared sensor (IR sensor). It is particularly preferred the detector works with radiation of a wavelength in a range from ≥ 600nm to ≤ 1500nm, preferably from ≥ 800nm to ≤ 1200nm.

The present invention also provides a vehicle comprising the driving support system or the fog detector. Preferably, the vehicle is an ego vehicle of a driver.

The principle of the invention is to merge two optical elements of the transmitter and the receiver in order to increase the range of detection of the fog by merging the in-air optical paths of the transmitted light of the received back-scattered light. Furthermore, the idea of the invention is the design of an optical element, preferably allowing the combination on a unique optical axis of both transmitter and receiver of a fog sensor. It allows to get rid of the misalignment drawback. This is also a cheap solution whilst it requires only one moulded optical element.

According to the invention, the light receiver is configured to produce at least one electronic noise signal based on received scattered light. According to the invention, the fog detector comprises a noise analyzer configured to analyze a form of the at least one electronic noise signal. Such a method for analyzing the signal is easily realizable.

According to the invention, it is provided that the first optical element and the second optical element are constructed as one piece. This allows the two optical elements to be aligned during the manufacturing process. This also reduces the effort later during the production of the fog detector.

According to a modified embodiment of the invention, it is provided that the first optical path corresponds to a centered optical path of the light emitter and the second optical path is decentered to the optical path of the light emitter. It is also possible, for example, to arrange the two components in such a way that the two optical paths are arranged exactly in reverse to each other.

According to a modified embodiment of the invention, it is provided that the first optical element and the second optical element are constructed and arranged such that they have a common optical axis.

According to a modified embodiment of the invention, it is provided that the first optical element comprises a collimating lens and the second optical element comprises a focusing lens. In other words, the transmitter optical element must collimate the light at best in order to propagate the farer with the highest optical density. Such element can be designed as a traditional thick lens.

According to a modified embodiment of the invention, it is provided that the first optical element or the second optical element comprises a Fresnel lens and/or a diffractive element, preferably a diffractive lattice. Alternatively or additionally, one of the optical elements may be a holographic element. For example, a central part of the optical elements, which, preferably, is comprised by the first optical element, may act like a Fresnel lens, and a surrounding area, which, preferably, is comprised by the second optical element, is designed as a Fresnel lens merged with a blazed grating.

According to a modified embodiment of the invention, it is provided that the second optical element comprises a prism-shaped lens part. This is a simple optical component in which, for example, models for calculating the beam cross-section are accessible.

According to a modified embodiment of the invention, it is provided that the first and/or the second optical element is/are arranged and constructed such that the decentered light receiver receives backscattered, focused light reflected by a target placed in far-field. This is an easy to implementable structure that is also cost-effective.

According to a modified embodiment of the invention, it is provided that the light emitter and the light receiver are constructed and/or arranged separately from each other. This allows the fog detector to be adapted to individual needs and conditions.

According to a modified embodiment of the invention, it is provided that the first and/or the second optical element at least partially comprises a design which is constructed according to a freeform optic design. Freeform optics involve optical designs with at least one freeform surface which, according to the ISO standard 17450-1:2011, has no translational or rotational symmetry about axes normal to the mean plane. Integration of freeform optics provide a lot of degrees of freedom. These additional degrees of freedom enable many potential advantages, including system miniaturization, reduced component count and even entirely new optical functionality that will have a profound effect on the optics industry.

These and other aspects of the invention will be apparent from and elucidated with reference to the embodiments described hereinafter. Individual features disclosed in the embodiments can constitute alone or in combination an aspect of the present invention. Features of the different embodiments can be carried over from one embodiment to another embodiment.

In the drawings:
- Fig. 1: shows a flow chart of a method according to the invention,
- Fig. 2: shows a schematic view of an embodiment of an arrangement of optical elements according to the invention,
- Fig. 3: shows another schematic view of the embodiment of the arrangement of the optical elements according to the invention,
- Fig. 4: shows a schematic view of a first embodiment of a second optical element,
- Fig. 5: shows a schematic view of a second embodiment of the second optical element,
- Fig. 6: shows another schematic view of the second embodiment of the second optical element,
- Fig. 7: shows another schematic view of the second embodiment of the second optical element and
- Fig. 8: shows a schematic view of an embodiment of a first optical element.

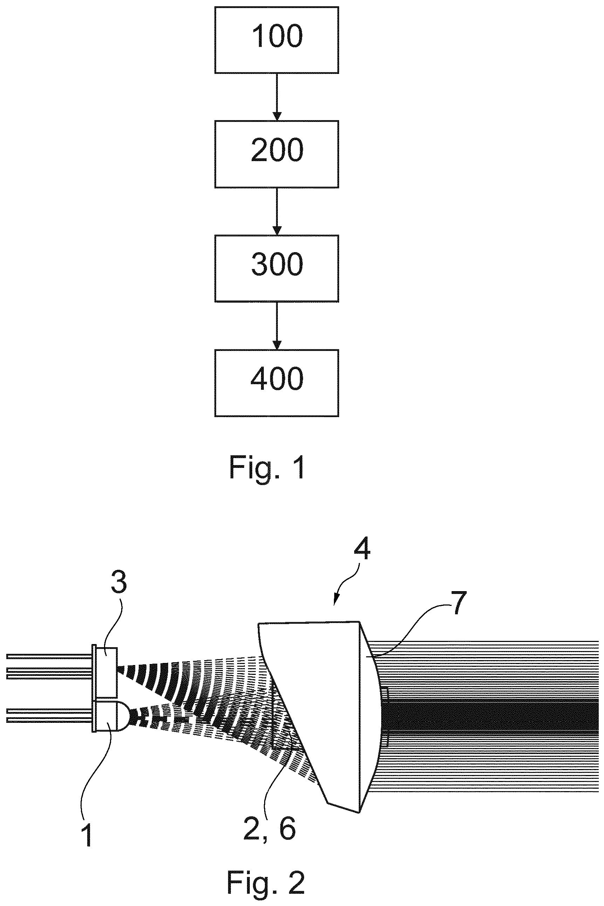

Figure 1 shows a flow chart of a method according to the invention.

The method is appropriate for fog detection for a vehicle and is carried out with a fog detector with a specially shaped lens, and with a vehicle-integrated driving support system for executing at least one step of the method.

According to step "100", the method comprises emitting at least one light pulse, by a light emitter 1 of the fog detector, and directing light of the at least one light pulse, via a first optical element 2, along a first optical path.

According to step "200", the method comprises directing scattered light of the at least one light pulse along a second optical path to a focal spot of a light receiver 3 of the fog detector, via a second optical element 4. The focal spot is spatially offset from an axis extending along the first optical path.

The first optical element 2 and the second optical element 4 are arranged and constructed such that the first and the second optical path at least partially overlap with each other and the first optical element 2 and the second optical element 4 are arranged and constructed such that the light emitter 1 and the light receiver 3 are operable on a common optical axis.

According to step "300", the method comprises producing at least one electronic noise signal based on received scattered light, by the light receiver 3. The method further comprises, according to a step "400", analyzing, by a noise analyzer, a form of the at least one electronic noise signal.

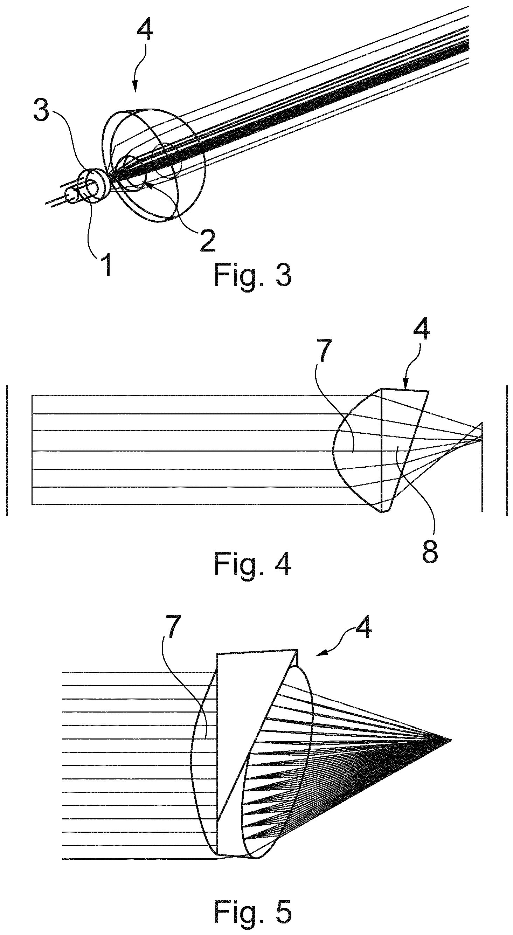

In Figure 2, a schematic view of a setup of the first optical element 2 and the second optical element 4 is shown. The first and the second optical element 2, 4 are made as one piece. In Figure 3, a further view of this setup is shown. The principle is to merge two optical elements of transmitter and receiver in order to increase the range of detection of the fog by merging the in-air optical paths of the transmitted light of the received back-scattered light.

In Figure 4, a first embodiment of the second optical element 4 is shown. The second optical element 4 comprises a focusing lens 7 and a prism-shaped part 8. The design for a receiver should be very simple while it is about focusing the backscattered light. In other words, the focal spot of the light receiver 3 is decentered in order to have place for both light emitter 1 and light receiver 3. To realize it, a prism-shaped part 8 is added on the backside of the lens.

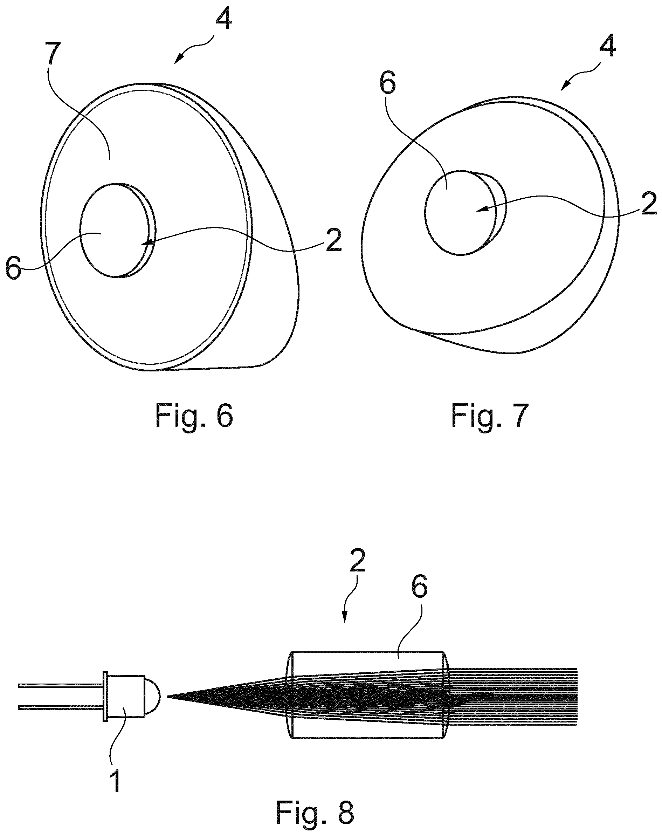

In Figure 5, a second embodiment of the second optical element 4 is shown. According to this embodiment, the second optical element 4 comprises, besides the parts described regarding the embodiment according to Figure 4, parts which are configured with the aid of free-form optics. In Figures 6 and 7, other views of the optical element 4 according to Figure 5 are depicted. Figure 6 shows a front view of the second optical element 4 and Figure 7 shows a rear view of the second optical element 4.

In Figure 8, a possible embodiment of the first optical element 2 is shown. According to this embodiment, the first optical element 2 is a collimating lens 6. The transmitter optical element has to collimate the light at best in order to propagate the farer with the highest optical density. Such element can be designed as a traditional thick lens.

The previously described optical arrangements could be used for a fog detection system, which could be implemented in any transparent part of the body of the vehicle, such as the headlights or the windshield. Furthermore, it could be a complement of already existing product like the rain sensor.

The analysis of the optical signal can be done by measuring its intensity or by performing a time-of-flight measurement. In both case, the analysis is based on the optical noise which is backscattered to the surrounding part of the optical element. An increase of the optical noise would indicate an increase of the backscattered light. By analyzing the optical noise in intensity and/or in time domain it is then possible to identify the presence of fog and to discriminate it from the optical burst that would be generated by an eventual object which would have hard physical properties.

### Reference signs list

- 1: light emitter
- 2: first optical element
- 3: light receiver
- 4: second optical element
- 6: collimating lens
- 7: focusing lens
- 8: prism-shaped lens part
- 100: directing light of the at least one light pulse, via a first optical element, along a first optical path
- 200: directing scattered light of the at least one light pulse along a second optical path to a focal spot of a light receiver of the fog detector, via a second optical element, the focal spot being spatially offset from an axis extending along the first optical path,
- 300: producing at least one electronic noise signal based on received scattered light, by the light receiver
- 400: analyzing, by a noise analyzer, a form of the at least one electronic noise signal

## Claims

1. Fog detector for a vehicle comprising:
a light emitter (1) configured to emit at least one light pulse;
a first optical element (2) configured to direct light of the at least one light pulse along a first optical path;
a second optical element (4) configured to direct scattered light of the at least one light pulse along a second optical path to a focal spot of a light receiver (3) of the fog detector, wherein the focal spot is spatially offset from an axis extending along the first optical path;
the first optical element (2) and the second optical element (4) being arranged and constructed such that the first and the second optical path at least partially overlap with each other and
the first optical element (2) and the second optical element (4) being arranged and constructed such that the light emitter (1) and the light receiver (3) are operable on a common optical axis,
wherein the first optical element (2) and the second optical element (4) are constructed as one piece,
wherein the light receiver (3) is configured to produce at least one electronic noise signal based on the received scattered light,
wherein the fog detector comprises a noise analyzer configured to analyze a form of the at least one electronic noise signal to identify the presence of fog and to discriminate it from the optical burst that would be generated by an object which would have hard physical properties.

2. Fog detector according to at least one of the preceding claims, wherein the first optical path corresponds to a centered optical path of the light emitter (1) and the second optical path is decentered to the optical path of the light emitter (1).

3. Fog detector according to at least one of the preceding claims, wherein the first optical element (2) and the second optical element (4) are constructed and arranged such that they have a common optical axis.

4. Fog detector according to at least one of the preceding claims, wherein the first optical element (2) comprises a collimating lens (6) and the second optical element (4) comprises a focusing lens (7).

5. Fog detector according to at least one of the preceding claims, wherein the second optical element (4) comprises a prism-shaped lens part (8).

6. Fog detector according to at least one of the preceding claims, wherein the first and/or the second optical element (2, 4) is/are arranged and constructed such that the decentered light receiver (3) receives backscattered, focused light reflected by a target placed in far-field.

7. Fog detector according to at least one of the preceding claims, wherein the light emitter (1) and the light receiver (3) are constructed and/or arranged separately from each other.

8. Driving support system comprising the fog detector according to at least one of the preceding claims.

9. Vehicle comprising the driving support system according to the preceding claim or the fog detector according to the preceding claims 1 to 7.

## Patentansprüche

1. Nebeldetektor für ein Fahrzeug, umfassend:
einen Lichtsender (1), der dafür konfiguriert ist, mindestens einen Lichtimpuls zu emittieren;
ein erstes optisches Element (2), das dafür konfiguriert ist, Licht des mindestens einen Lichtimpulses entlang eines ersten optischen Pfades zu lenken;
ein zweites optisches Element (4), das dafür konfiguriert ist, Streulicht des mindestens einen Lichtimpulses entlang eines zweiten optischen Pfades zu einem Brennfleck eines Lichtempfängers (3) des Nebeldetektors zu lenken, wobei der Brennfleck räumlich von einer sich entlang des ersten optischen Pfades erstreckenden Achse versetzt ist;
wobei das erste optische Element (2) und das zweite optische Element (4) so angeordnet und ausgebildet sind, dass sich der erste und der zweite optische Pfad zumindest teilweise miteinander überlappen, und
wobei das erste optische Element (2) und das zweite optische Element (4) so angeordnet und ausgebildet sind, dass der Lichtsender (1) und der Lichtempfänger (3) auf einer gemeinsamen optischen Achse betreibbar sind,
wobei das erste optische Element (2) und das zweite optische Element (4) einstückig ausgebildet sind,
wobei der Lichtempfänger (3) dafür konfiguriert ist, basierend auf dem empfangenen Streulicht mindestens ein elektronisches Rauschsignal zu erzeugen,
wobei der Nebeldetektor einen Rauschanalysator umfasst, der dafür konfiguriert ist, eine Form des mindestens einen elektronischen Rauschsignals zu analysieren, um das Vorhandensein von Nebel zu identifizieren und ihn von dem optischen Burst zu unterscheiden, der von einem Objekt erzeugt werden würde, das harte physikalische Eigenschaften aufweist.

2. Nebeldetektor nach mindestens einem der vorhergehenden Ansprüche, wobei der erste optische Pfad einem zentrierten optischen Pfad des Lichtsenders (1) entspricht und der zweite optische Pfad zum optischen Pfad des Lichtsenders (1) dezentriert ist.

3. Nebeldetektor nach mindestens einem der vorhergehenden Ansprüche, wobei das erste optische Element (2) und das zweite optische Element (4) so ausgebildet und angeordnet sind, dass sie eine gemeinsame optische Achse aufweisen.

4. Nebeldetektor nach mindestens einem der vorhergehenden Ansprüche, wobei das erste optische Element (2) eine Kollimatorlinse (6) umfasst und das zweite optische Element (4) eine Fokussierlinse (7) umfasst.

5. Nebeldetektor nach mindestens einem der vorhergehenden Ansprüche, wobei das zweite optische Element (4) ein prismenförmiges Linsenteil (8) umfasst.

6. Nebeldetektor nach mindestens einem der vorhergehenden Ansprüche, wobei das erste und/oder das zweite optische Element (2, 4) so angeordnet und ausgebildet ist/sind, dass der dezentrierte Lichtempfänger (3) rückgestreutes, fokussiertes Licht empfängt, das von einem im Fernfeld platzierten Ziel reflektiert wird.

7. Nebeldetektor nach mindestens einem der vorhergehenden Ansprüche, wobei der Lichtsender (1) und der Lichtempfänger (3) getrennt voneinander ausgebildet und/oder angeordnet sind.

8. Fahrassistenzsystem, umfassend den Nebeldetektor nach mindestens einem der vorhergehenden Ansprüche.

9. Fahrzeug, umfassend das Fahrassistenzsystem nach dem vorhergehenden Anspruch oder den Nebeldetektor nach den vorhergehenden Ansprüchen 1 bis 7.

## Revendications

1. Détecteur de brouillard pour un véhicule, comprenant :
un émetteur de lumière (1) configuré pour émettre au moins une impulsion lumineuse ;
un premier élément optique (2) configuré pour diriger la lumière de l'au moins une impulsion lumineuse le long d'un premier chemin optique ;
un deuxième élément optique (4) configuré pour diriger la lumière diffusée de l'au moins une impulsion lumineuse le long d'un deuxième chemin optique vers un point focal d'un récepteur de lumière (3) du détecteur de brouillard, dans lequel le point focal est décalé spatialement par rapport à un axe s'étendant le long du premier chemin optique ;
le premier élément optique (2) et le deuxième élément optique (4) étant agencés et construits de telle sorte que le premier et le deuxième chemin optique se chevauchent au moins partiellement l'un avec l'autre et
le premier élément optique (2) et le deuxième élément optique (4) étant agencés et construits de telle sorte que l'émetteur de lumière (1) et le récepteur de lumière (3) peuvent fonctionner sur un axe optique commun,
dans lequel le premier élément optique (2) et le deuxième élément optique (4) sont construits d'une seule pièce,
dans lequel le récepteur de lumière (3) est configuré pour produire au moins un signal de bruit électronique basé sur la lumière diffusée reçue,
dans lequel le détecteur de brouillard comprend un analyseur de bruit configuré pour analyser une forme de l'au moins un signal de bruit électronique pour identifier la présence de brouillard et pour le discriminer de la salve optique qui serait générée par un objet qui aurait des propriétés physiques dures.

2. Détecteur de brouillard selon au moins l'une des revendications précédentes, dans lequel le premier chemin optique correspond à un chemin optique centré de l'émetteur de lumière (1) et le deuxième chemin optique est décentré par rapport au chemin optique de l'émetteur de lumière (1).

3. Détecteur de brouillard selon au moins l'une des revendications précédentes, dans lequel le premier élément optique (2) et le deuxième élément optique (4) sont construits et agencés de telle sorte qu'ils ont un axe optique commun.

4. Détecteur de brouillard selon au moins l'une des revendications précédentes, dans lequel le premier élément optique (2) comprend une lentille de collimation (6) et le deuxième élément optique (4) comprend une lentille de focalisation (7).

5. Détecteur de brouillard selon au moins l'une des revendications précédentes, dans lequel le deuxième élément optique (4) comprend une partie de lentille en forme de prisme (8).

6. Détecteur de brouillard selon au moins l'une des revendications précédentes, dans lequel le premier et/ou le deuxième élément optique (2, 4) est/sont agencés et construits de telle sorte que le récepteur de lumière décentré (3) reçoit de la lumière rétrodiffusée et focalisée réfléchie par une cible placée en champ lointain.

7. Détecteur de brouillard selon au moins l'une des revendications précédentes, dans lequel l'émetteur de lumière (1) et le récepteur de lumière (3) sont construits et/ou agencés séparément l'un de l'autre.

8. Système d'aide à la conduite comprenant le détecteur de brouillard selon au moins l'une des revendications précédentes.

9. Véhicule comprenant le système d'aide à la conduite selon la revendication précédente ou le détecteur de brouillard selon les revendications précédentes 1 à 7.
